# EUROPEAN PATENT APPLICATION

(11) **EP 4 671 586 A1**
(43) Date of publication of application: **31.12.2025**
(21) Application number: 24185092.4
(22) Date of filing: 27.06.2024
(51) Int. Cl.: F16L 3/10, H02G 3/32

(54) **SERVICE LINE MOUNTING DEVICE WITH HINGE**

(71) Applicant: HellermannTyton Limited, Crawley, West Sussex RH10 1DQ (GB)
(72) Inventor: CIPRIANI, Stefano, Wythenshawe, Manchester (GB)
(74) Representative: Hernandez, Yorck

(57) **Abstract**

The disclosure relates to a service line mounting device (1) with a main unit (2) and a sliding unit (3) where the main unit (2) and the sliding unit (3) are configured to delimit, in an assembled state, a through-opening (4) for one or more service lines (8), and the sliding unit (3) is configured to slide along a top guide rail element (2ai) of the main unit (2) and along a bottom guide rail element (2bi) in order to adjust a size of the through-opening (4) in a transverse direction (TR), with the transverse direction (TR) running transverse to a through direction (TH) of the through-opening (4), wherein the main unit (2) comprises a top part (2a) and a bottom part (2b) which are connected by a hinge (2c), with the top part (2a) comprising the top guide rail element (2ai) and the bottom part (2b) comprising the bottom guide rail element (2bi) in order to provide a space-saving solution for neatly arranging service lines (8) in a reliable way with improved maintenance options.

## Description

### Field of the invention

The disclosure relates to a service line mounting device with a main unit and a sliding unit where the main unit and the sliding unit are configured to delimit, in an assembled state, a through-opening for one or more service lines, and the sliding unit is configured to slide along a top guide rail element of the main unit and along a bottom guide rail element in order to adjust a size of the through-opening in a transverse direction, with the transvers direction running transverse to a through direction of the through-opening.

### Background

Cable routing in many technical applications requires mounting of service lines, i.e. cables, cable conduits, tubes and the like, to an infrastructure element such as a machine housing or a building. To this end, cable channels and also individual clamps may be used, which are screwed to the infrastructure element. Examples for such a clamp is the HellermannTyton ratchet P-clamp, or the HellermannTyton High Voltage Cable Clamp.

Clamps may also be used not for individual mounting of the service lines, but for mounting several service lines running in parallel next to each other at the same time. One such example is the HellermannTyton Screwed Ratchet Clamp. There, one leg of a U-shaped base is fixed both at two ends at the infrastructure element, and a cap is slid onto the free end of the legs after the service lines are inserted into the clamp. In such a solution, the service lines are arranged next to each other.

Alternatively, rails as or similar to a Unistrut rail are used to mount service lines, usually when several service lines that run along each other have to be mounted. To attach the service lines to the rail, U-shape metal clamps such as the Phoenix Steel Cable Clamp are used to clamp one or two respective cables onto the rail. The metal clamps are hooked into the rail, in some embodiments similar to a quarter-turn fixing, and by tightenting a metal screw that presses the service lines against the rail, the clamp is also fixed in its position. In such a solution, cables may be arranged on top of each other.

The technical task, therefore, is to provide a space-saving solution for neatly arranging service lines in a reliable way with improved maintenance options.

### Overview

This task is solved by the objects of the independent claim. Advantageous embodiments will be apparent from the dependent claims, the description and the figures.

One aspect relates to a service line mounting device, SLMD, with a main unit and a sliding unit where main unit and sliding unit are configured to delimit, in an assembled state, a through-opening for one or more service lines. Service lines may be or comprise one or more cables, cable conduits, tubes and/or the like. The sliding unit is configured to slide along a top guide rail element of the main unit and along a bottom guide rail element in order to adjust a size of the through-opening in a transverse direction, with the transverse direction running transverse to a through direction of the through-opening. Thus, the limits of the through-opening are formed by the main unit and the sliding unit when sliding unit engages top and bottom guide rail element simultaneously, i.e. when main unit and sliding unit are in the assembled state.

The main unit comprises a top part and a bottom part which are connected movably with respect to one another by a hinge, with the top part comprising the top guide rail element and the bottom part comprising the bottom guide rail element. Consequently, the sliding unit is configured to connect top and bottom part in the assembled state, hindering a rotation around the hinge that is possible otherwise (i.e. in an unassembled state where the sliding unit does not engage both top and bottom rail element).

This gives several advantages with respect to maintenance while providing a reliable mounting for a large variety of service lines. The hinge allows to swing the top part out, away from the bottom part even with mounted service lines. So all service lines are accessible evenly, regardless of the order in the through-opening. The service lines can therefore easily be maintained/replaced individually. Due to this improved accessibility, fixing means such as the attachment element introduced below may be located in a position where they are covered by the service lines during application and the mounting device/bottom part remains easily replaceable/removable. This placement of attachment means saves installation space in the transverse direction, which again leads to improved maintenance options and improved service line capacity in a given setting, e.g. a given length of a Unistrut rail. The usage of the bottom part area below the service lines for attaching the SLMD also allows to implement different attachment technologies to improve versatility of the SLMD. For instance, conventional bushings and other attachment elements such as a proprietary attachment means may be implemented at the same time since the outer dimensions may remain the same. As a consequence, the SLMD may be applied in many different situations - advantageously, the hinge design also allows scaling with respect to service lines diameter (which usually comes with stiffer service lines), and service line number (the space usually used for attaching the SLMD can now be used for the purpose of service line mounting). For stiffer and more service lines, the improved accessibility provided by the hinge design is improving maintenance options even more.

In one embodiment, it is provided that the bottom part comprises, in the transverse direction between the hinge and a remote end of the top part in the assembled state, at least one attachment element for attaching the bottom part and/or the SLMD to another structure. The other structure may be e.g. an external structure such as a cable tray or a Unistrut rail. The attachment element may be a bushing for a conventional nut-and-bolt attachment.

The other structure may also be a foot structure configured for attachment to the bottom part via a snap-in interface. The foot structure may be a standardized foot structure and/or the snap-in interface a standardized interface used also for other service line mounting devices than the described hinge design SLMD for flat stacking of service lines, e.g. a push-in SLMD for elevated stacking of service lines. The foot structure thus may have the snap-in interface for connecting the SLMD to the foot structure, and a mount for mounting the foot structure to the external structure. For instance, the foot structure may have a clip-in mount for mounting the foot structure, thus the SLMD, to said external structure, the clip-in mount having an at least essentially rectangular cross-section hindering a rotation of the foot structure around an axis running along the transverse direction when mounted onto the external structure, in particular a Unistrut rail or a rail technically equivalent to a Unistrut rail.

A Unistrut rail may be understood as fastening rail with two parallel side walls with a base wall connecting the side walls, the side walls being flanged at their end edge remote from the base wall along the main direction of extension in order to allow hooking-in of respective individual mounting means such as the SLMD via the foot structure.

Preferably, the bottom part comprises attachment elements of different types, e.g. one or more bushings and one or more snap-in interfaces. This gives the advantage of improved versatility and maintenance options.

In a further embodiment, it is provided that the top part comprises, at its remote end remote from the hinge, a stopper protrusion configured to provide resistance against sliding the sliding unit in a direction away from the hinge over the remote end of the top part. This hinders the unintentional loss of the sliding part, in particular when the top part is swung out, i.e. the SLMD open/unassembled and thus contributes to maintenance.

In another embodiment, it is provided that in the assembled state, the top guide rail element extends in the transverse direction away from the hinge further than the bottom guide rail element. In particular the top guide rail element extends to an extent that allows the sliding unit to disengage from the bottom guide rail element while still engaged with the top guide rail element, preferably while the stopper protrusion not being overcome by the sliding unit. This allows to open the SLMD/swing out the top part with the sliding unit attached to the top part, which further contributes to space-saving maintenance.

In a further embodiment, it is provided that in the assembled state, a length of the top part in the transverse direction is equal or larger than a length of the bottom part, in particular with the length of the top part defining, in the assembled state, the length of the service line mounting device in the transverse direction. So the relevant outer dimension in the transverse direction is determined by the movable top part. This reduces space consumption while still allowing for the advantageous embodiments of the last two paragraphs, and further contributes to space-saving maintenance - in particular since during maintenance, the SLMD is open/unassembled and the requires less space in the transverse direction.

In another embodiment, it is provided that the top part comprises, in an end region of the top part which comprises the remote end, a restrictive element configured to provide resistance against sliding the sliding unit in a direction towards the hinge, in particular when the sliding unit is positioned at the remote end, preferably with the restrictive element being part of the top guide rail element or being arranged on the top guide rail element. For example, the restrictive element may be or comprise one or more pinch and/or clamp elements that need to be pinched/pressed (together) in order to allow the sliding of the sliding unit towards the hinge. This hinders unintentional slipping of the sliding unit towards the hinge during installation/maintenance. It is particulary advantageous when top part and sliding unit are configures for a ratching interaction (see below). So the sliding unit may be trapped between the above stopper protrusion and restrictive element, which contributes to maintenance,

In a further embodiment, it is provided that an inner surface of the top part and/or the bottom part, the inner surface delimiting the through-opening and extending along the through direction and the transverse direction, is chamfered at one or more edges running along the transverse direction. In particular, the chamfered one or more edges may form the respective guide rail element or a part of the respective guide rail element. This prevents damage of the service lines, reducing the need for maintenance.

In another embodiment, it is provided that the top part of the main unit and/or the bottom part of the main unit and/or sliding unit are rigid as compared to the service lines, for example. This allows in a particularly robust SLMD, which does not need to be replaced/maintained often.

In a further embodiment, it is provided that the top part and the sliding unit are configured for a ratching interaction, preferably with the sliding unit comprising a male ratchet and the top part comprising a female ratchet. The ratching interaction may be a releasable ratching interaction. Preferably, the bottom part is not configured for such a ratching interaction with the sliding unit (i.e. only the top part and the sliding unit are configured for the ratching interaction). This allows to adjust the size of the through-opening and fix the service lines reliably in their respective positions, again fostering ease-of-maintenance.

In another embodiment, it is provided that the top guide rail element and/or the bottom guide rail element comprise two sub-elements, which preferably form respective edges that delimit an inner surface of the top part and/or bottom part, respectively. The inner surfaces may run along through-direction and transverse direction. This reduces the number of edges, and increases the areas of the surfaces the service lines are in physical contact, which reduces mechanical stress for the service lines. This further contributes to maintenance.

In a further embodiment, it is provided that the top part and/or the bottom part and/or the sliding unit are injection-mold of plastic, preferably with metallic bushing. So the bushing may comprise the only metal of the SLMD. This gives the advantage of a 100% current-insulating SLMD, which is favorable in particular in case of electric malfunctioning - again contributing to maintenance.

The features and combinations of features described, including those of the general introduction, as well as the features and combinations of features disclosed in the figure description or in the figures alone, may be used not only alone or in the combination described, but also with other features or without some of the features disclosed, without departing from the scope of the invention. Consequently, embodiments are also part of the invention which are not explicitly shown and described in the figures, but which can be produced by separately combining the individual features disclosed in the figures. Therefore, embodiments and combinations of features which do not comprise all features of an originally formulated independent claim are also to be considered disclosed. Furthermore, embodiments and combinations of features are to be regarded as disclosed which deviate from or go beyond the combinations of features described in the dependencies of the claims.

In the context of the present disclosure, "transverse/along " may be understood as "at least substantially vertical/parallel", i.e. "vertical/parallel" or "substantially vertical/parallel", i.e. vertical/parallel except for a predetermined deviation. The predetermined deviation can, for example, be at most 15°, preferably at most 5°, particularly preferably at most 3°. Accordingly, "oppositely oriented" may be understood in the context of the present disclosure as "at least substantially oppositely oriented" i.e. "at least substantially antiparallel oriented". The limitation "substantially" may also refer to a percentage predetermined maximum permissible deviation, for example at most 15%, preferably at most 5%, particularly preferably at most 3%.

### Detailed description

Exemplary embodiments are described in more detail below with reference to schematic drawings. Therein show
- Fig. 1: an exemplary embodiment of a service line mounting device in an assembled state in a perspective view;
- Fig. 2: two exemplary embodiments of a SLMD in a comparative side view;
- Fig. 3: an open main unit of an exemplary embodiment of a SLMD in a side view;
- Fig. 4: the open main unit of Fig. 3 in a bottom view;
- Fig. 5: the exemplary embodiment of Fig. 1 attached to an external structure in a sectional view;
- Fig. 6: the exemplary embodiment of Fig. 1 attached to another external structure in another sectional view;
- Fig. 7: an exemplary sliding unit in a sectional view;
- Fig. 8: exemplary designs of guide rail elements in comparartive side views;
- Fig. 9: another exemplary embodiment of a SLMD in an assembled state in a perspective view;
- Fig. 10: the exemplary embodiment of Fig. 9 in a top view; and
- Fig. 11: the exemplary embodiment of Fig. 9 with service lines in place in a perspective view.

In the figures, the same or functionally identical features are provided with the same reference signs.

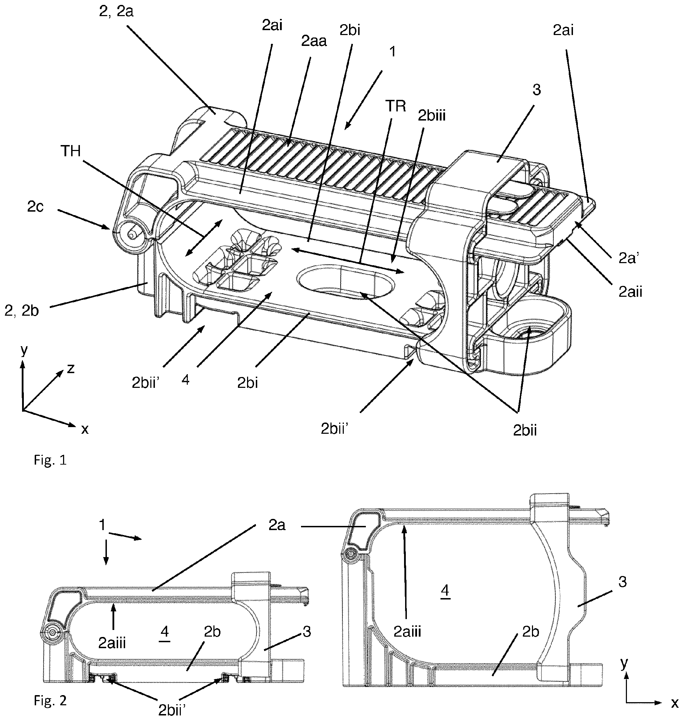

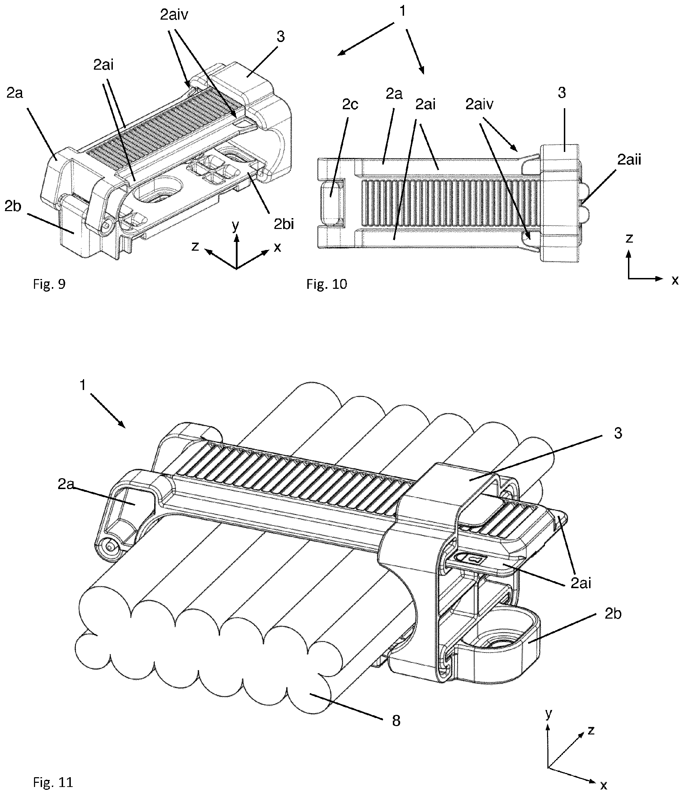

Fig. 1 shows an exemplary embodiment of a service line mounting device in an assembled state in a perspective view. The service line mounting device 1 comprises a main unit 2 and a sliding unit 3. The main unit 2 and the sliding unit 3 are configured to delimit, in the shown assembled or close state, a through-opening 4 for one or more service lines 8 (Fig. 11) when in contact with each other. The sliding unit 3 is configured to slide along a top guide rail element 2ai of the main unit 2 and along a bottom guide rail element 2bi in order to adjust a size of the through-opening 4 in a transverse direction TR (here along the x-axis), with the transvers direction TR running transverse to a through direction TH (here along the z-axis) of the through-opening 4.

The main unit 2 comprises a top part 2a and a bottom part 2b which are connected by a hinge 2c, with the top part 2a comprising the top guide rail element 2ai and the bottom part 2b comprising the bottom guide rail element 2bi. Both top and bottom guide rail element 2ai, 2bi are pair guide rail elements 2ai, 2bi here, with respective rails at, in the through-direction TH, opposed edges of the top and bottom part 2a, 2b, respectively. So the top guide rail element 2ai and the bottom guide rail element 2bi comprise two sub-elements, which in the shown example form respective edges that delimit an inner surface 2aiii (Fig. 2), 2biii of the top part 2a and bottom part 2b, respectively. These inner surfaces 2aiii, 2biii are in contact with the service lines when the SLMD 1 is in use.

In the present example, the bottom part 2b comprises, in the transverse direction TR between the hinge 2c and a remote end 2a' of the top part 2a in the shown assembled state, at least one attachment element for attaching the bottom part 2b to another structure, here several attachment elements 2bii, 2bii'. These attachment elements 2bii, 2bii' are of different type in this example, two attachment elements 2bii are respective bushings, two other attachment elements 2bii' form respective snap-in interfaces.

Furthermore, in the shown example, the top part 2a comprises, at its remote end 2a' remote from the hinge 2c, a stopper protrusion 2aii configured to provide resistance against sliding the sliding unit 3 in a direction away from the hinge 2c over the remote end 2aii of the top part 2a, i.e. against removing the sliding unit 3 from the top unit 2a.

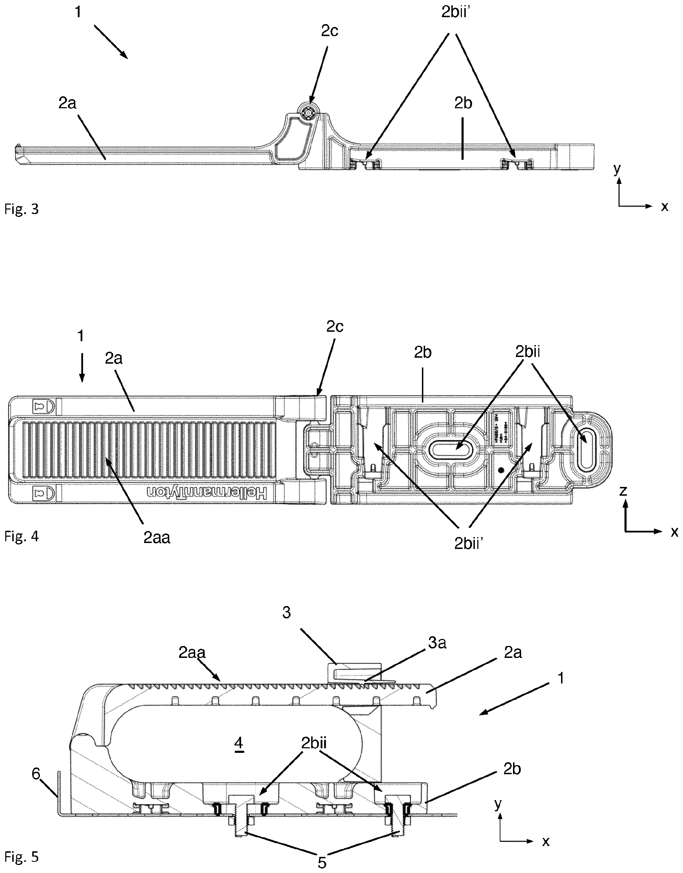

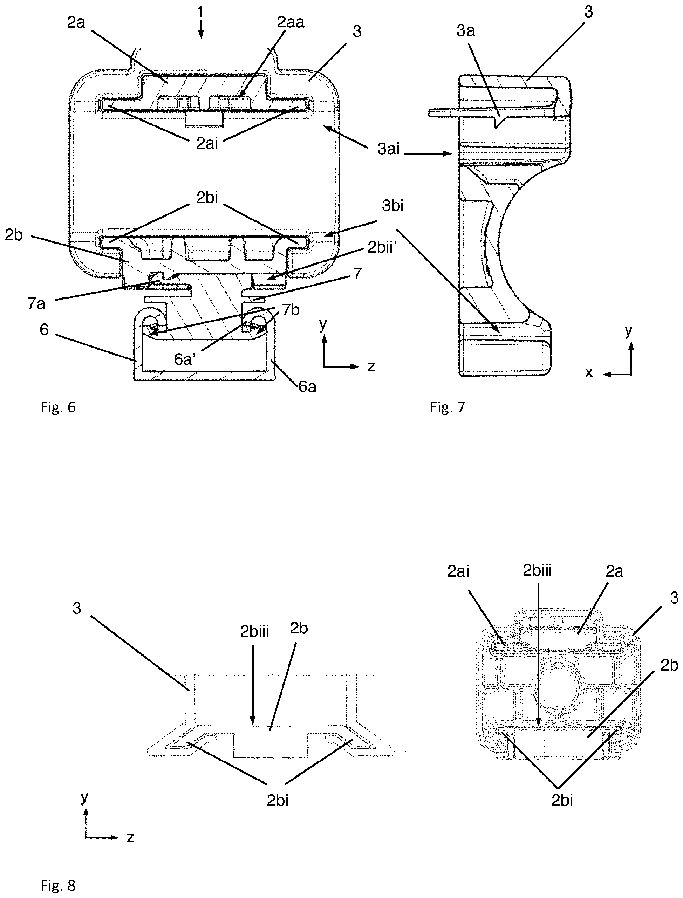

Here, the top part 2a and the sliding unit 3 are configured for a ratching interaction, preferably with the sliding unit 3 comprising a male ratchet 3a (Figs. 5, 7) and the top part 2a comprising a female ratchet 2aa.

Fig. 2 shows two exemplary embodiments of a SLMD in a comparative side view. Through choice of a different bottom part 2b, the SLMD 1 is fit for service lines of different diameters and/or a different amount of service lines. The top part 2a may be the same, which makes manufacturing and also maintenance easier through equality of parts. The sliding unit 3 is adapted to the different sizes of SLMDs 1. Preferably, the attachment elements of the different embodiments are arranged identically, which fosters interoperability and further contributes to ease-of-maintenance.

Fig. 3 shows an open main unit of an exemplary embodiment of a SLMD in a side view, in an open state where the sliding unit 3 is removed. The hinge design allows a great rigidity of the individual parts 2a, 2b while accessibility of the all service lines and the attachment elements 2bii, 2bii' is maintained (see Fig. 4).

Fig. 5 shows the exemplary embodiment of Fig. 1 attached to an external structure, in an assembled state, in a sectional view along the transverse direction TR. In this example, screws as attachment means 5 are used to attach bottom part 2b / SLMD 1 to an external structure 6, which is a cable tray here. The screws attach bottom part 2a / SLMD 1 to the cable tray directly via the bushings 2bii here, i.e. without additional foot structure.

As depicted here, in the assembled state, a length of the top part 2a in the transverse direction TR (here x-direction) may be equal or larger than a length of the bottom part 2b in this direction. The length of the top part 2a may defining, in the assembled state, the length of the SLMD 1 in the transverse direction TR and thus the space required in a direction perpendicular to the service lines in e.g. the cable tray as external structure 6.

Fig. 6 show the exemplary embodiment of Fig. 1 attached to another external structure in another sectional view along the through direction TR. The sliding unit 3 engages with the guide rail elements 2ai, 2bi via respective counterparts 3ai, 3bi (see also Fig. 7). A foot structure 7 is used to attach the bottom part 2b /SLMD 1 to a Unistrut rail as external structure 6. The foot structure 7 is fixed to a snap-in interface as attachment element 2bii' of the bottom part 2b. The clip-in mount 7 comprises a snap-in finger 7a for releasable fixation to the snap-in interface 2bii' here. The foot structure 7 features a clip-in mount 7b for mounting the foot structure 7, thus indirectly also the bottom part 2b, to the external structure 6 by hooking into the flanged edges 6a' of the sidewalls 6a.

The clip-in mount 7b has, in the present example, an at least essentially rectangular cross-section hindering a rotation of the foot structure 7 around an axis running along the transverse direction TR when mounted. So in the present example, the foot structure(s) 7 can be slid in the x direction perpendicular to the drawing plane, but not be rotated around the y-axis. Alternatively, the foot structure 7 can be implemented with a standard quarter-turn mount for the Unistrut rail.

Fig. 8 shows exemplary designs of guide rail elements in comparative side views. The guide rail elements 2ai, 2bi on the right hand side correspond to the guide rail elements 2ai, 2bi of the previous examples. Regarding the exemplary design on the left hand side, the inner surface 2bii delimiting the through-opening 4 and extending along the through direction TH (here z-direction) and the transverse direction TR (here x-direction) is chamfered at one or more edges, here two edges, that run along the transverse direction TR. This is shown for the inner side 2biii of the bottom part 2b, but may apply, mutatis mutandis to the inner side 2aiii of the top part 2a in addition or alternatively. In the example shown, the chamfered edges from at least part of the respective guide rail element 2bi.

Figs. 9 and 10 show another exemplary embodiment of a SLMD in an assembled state in a perspective as well as a top view. In this example, the top part 2a comprises, in an end region of the top part which comprises the remote end 2a', a restrictive element 2aiv configured to provide resistance against sliding the sliding unit 3 in a direction towards the hinge 2c. As depicted here, this may be true when the sliding unit 3 is positioned at the remote end 2a', i.e. when the sliding unit 3 is abutting the stopper protrusion 2aii (covered by sliding unit 3 here). The restrictive element 2aiv may be part of the top guide rail element 2ai or merge into said top guide rail element 2ai, as shown.

As apparent from Fig. 10, the restrictive element 2aiv hinders the sliding unit 3 from moving towards the hinge 2c by broadening the top part 2a, here in the through direction TH (z-direction here), in the area of the guide rail element 2ai in this example. So in this embodiment, the restrictive element 2aiv is shaped as a pinch that needs to be pinched in the through direction to let the sliding unit 3 slide over it towards the hinge 2c. In Fig. 10, the sliding unit 3 is trapped between stopper protrusion 2aii and the non-pinched restriction element 2aiv. For a rigid top part 2a, the required elasticity of the restrictive element 2aiv may be achieved through adapted material thickness, due to limited usage frequency. This also applies for the stopper protrusion 2aii.

Fig. 11 shows the exemplary embodiment of Figs. 9 and 10 with service lines in place in a perspective view. The service lines 8 run along the through direction TH during intended use. As apparent from this example, the top guide rail element 2ai may extend in the transverse direction TR away from the hinge 2c further than the bottom guide rail element 2bi. As also apparent from Fig. 9, this is true to an extent that allows the sliding unit 3 to disengage from the bottom guide rail element 2bi while still engaged with the top guide rail element 2ai, possibly even while the stopper protrusion 2aii is not being overcome by the sliding unit 3. Note that the restrictive element 2aiv is not visible in Fig. 11 as it is embraced by sliding unit 3.

The proposed solution provides a space-saving, easy-to-maintain service line mounting device where a focus is on a flat stacking of the service lines, i.e. a stacking the service lines mainly along a surface of a supporting external structure. In a sister application, an alternative solution for a space-saving, easy-to-maintain service line mounting device is provided where a focus is on a elevated stacking of the service lines, i.e. a stacking the service lines mainly transverse to a surface of a supporting external structure. Both types of service line mounting device may rely on identical foot structures for attaching the devices to Unistrut rails, providing a versatile service line mounting system of solution for a plethora of different applications.

## Claims

1. Service line mounting device (1) with a main unit (2) and a sliding unit (3) where
- the main unit (2) and the sliding unit (3) are configured to delimit, in an assembled state, a through-opening (4) for one or more service lines (8), and
- the sliding unit (3) is configured to slide along a top guide rail element (2ai) of the main unit (2) and along a bottom guide rail element (2bi) in order to adjust a size of the through-opening (4) in a transverse direction (TR), with the transverse direction (TR) running transverse to a through direction (TH) of the through-opening (4), **characterized in that**
- the main unit (2) comprises a top part (2a) and a bottom part (2b) which are connected by a hinge (2c), with
- the top part (2a) comprising the top guide rail element (2ai) and
- the bottom part (2b) comprising the bottom guide rail element (2bi).

2. Service line mounting device (1) according to the preceding claim,
**characterized in that**
the bottom part (2b) comprises, in the transverse direction (TR) between the hinge (2c) and a remote end (2a') of the top part (2a) in the assembled state, at least one attachment element (2bii, 2bii'), in particular at least one bushing and/or at least one snap-in interface, for attaching the bottom part (2b) to another structure (6).

3. Service line mounting device (1) according to any one of the preceding claims, **characterized in that**
the top part (2a) comprises, at its remote end (2a') remote from the hinge (2c), a stopper protrusion (2aii) configured to provide resistance against sliding the sliding unit (3) in a direction away from the hinge (2c) over the remote end (2a') of the top part (2a).

4. Service line mounting device (1) according to any one of the preceding claims, **characterized in that**,
in the assembled state, the top guide rail element (2ai) extends in the transverse direction (TR) away from the hinge (2c) further than the bottom guide rail element (2bi), in particular to an extent that allows the sliding unit (3) to disengage from the bottom guide rail element (2bi) while still engaged with the top guide rail element (2ai), preferably while the stopper protrusion (2aii) not being overcome by the sliding unit (3).

5. Service line mounting device (1) according to any one of the preceding claims, **characterized in that**,
in the assembled state, a length of the top part (2a) in the transverse direction (TR) is equal or larger than a length of the bottom part (2b), in particular with the length of the top part (2a) defining, in the assembled state, the length of the service line mounting device (1) in the transverse direction (TR).

6. Service line mounting device (1) according to any one of the preceding claims, **characterized in that**
the top part (2a) comprises, in an end region of the top part (2a) which comprises the remote end (2a'), a restrictive element (2aiv) configured to provide resistance against sliding the sliding unit (3) in a direction towards the hinge (2c), in particular when the sliding unit (3) is positioned at the remote end (2a'), preferably with the restrictive element (2aiv) being part of the top guide rail element (2ai) or being arranged on the top guide rail element (2ai).

7. Service line mounting device (1) according to any one of the preceding claims, **characterized in that**
an inner surface (2aii, 2bii) of the bottom part (2b) and/or the top part (2a), the inner surface delimiting the through-opening (4) and extending along the through direction (TH) and the transverse direction (TR), is chamfered at one or more edges running along the transverse direction (TR), in particular with the one or more edges forming the respective guide rail element (2bi) or part of the respective guide rail element (2bi).

8. Service line mounting device (1) according to any one of the preceding claims, **characterized in that**
the top part (2a) of the main unit (2) and/or the bottom part (2b) of the main unit (2) and/or the sliding unit (3) are rigid.

9. Service line mounting device (1) according to any one of the preceding claims, **characterized in that**
the top part (2a) and the sliding unit (3) are configured for a ratching interaction, preferably with the sliding unit (3) comprising a male ratchet (3a) and the top part (2a) comprising a female ratchet (2aa).

10. Service line mounting device (1) according to any one of the preceding claims, **characterized in that**
the top guide rail element (2ai) and/or the bottom guide rail element (2bi) comprise two sub-elements, which preferably form respective edges that delimit an inner surface (2aii, 2bii) of the top part (2a) and/or bottom part (2b), respectively.

11. Service line mounting device (1) according to any one of the preceding claims, **characterized in that**
the top part (2a) and/or the bottom part (2b) and/or the sliding unit (3) are injection-mold of plastic, preferably with metallic bushing.
